# EUROPEAN PATENT APPLICATION

(11) **EP 2 048 112 A1**
(43) Date of publication of application: **15.04.2009**
(21) Application number: 07118376.8
(22) Date of filing: 12.10.2007
(51) Int. Cl.: C01B 15/10

(54) **Use of a nozzle for manufacturing sodium percarbonate**

(30) Priority: 09.10.2007 EP 07118072
(71) Applicant: Kemira Kemi AB, 251 09 Helsingborg (SE)
(72) Inventor: Weiss, Uwe, DE-96242, Sonnefeld (DE); Jacob, Michael, DE-99427, Weimar (DE); Sohlberg, Elin, SE-254 51, Helsingborg (SE); Sandqvist, Ajse, SE-252 25, Helsingborg (SE); Lauritzson, Fredrik, SE-256 54, Ramlösa (SE)
(74) Representative: Suominen, Kaisa Liisa

(57) **Abstract**

The present invention relates to a use of a two-way spray nozzle (1) with protective gas for manufacturing granular sodium percarbonate, said nozzle comprising a central tube (2) having an outlet for an aqueous hydrogen peroxide solution, an inner jacket tube (3) arranged coaxially around the central tube, and having an outlet, for aqueous sodium carbonate solution, an outer jacket tube (4) arranged coaxially around the central tube and inner jacket tube, and having an outlet for a protective gas, a threaded ring slot (5) arranged around the central tube at a distance from the outlet of the central tube, wherein the threads of the ring slet are arranged at an angle a with respect of the direction of the longitudinal axis (12) of the central tube, and in which said protective gas is used at a pressure of less than 0.7 bar. The present invention also relates to a method for manufacturing granular sodium percarbonate.

## Description

### FIELD OF THE INVENTION

The present invention relates to a use of a two-way spray nozzle with protective gas for manufacturing granular sodium percarbonate. The nozzle comprises a central tube having an outlet for an aqueous hydrogen peroxide solution, an inner jacket tube arranged coaxially around the central tube, and having an outlet for aqueous sodium carbonate solution, an outer jacket tube arranged coaxially around the central tube and inner jacket tube, and having an outlet for a protective gas, and a threaded ring slot arranged between the central tube and the inner jacket at a distance from the outlet of the central tube, wherein the threads of the ring slot are arranged at an angle α with respect of the direction of the longitudinal axis of the central tube. The present invention also relates to a method for manufacturing granular sodium percarbonate.

### BACKGROUND OF THE INVENTION

The prior art knows several different nozzles for manufacturing granulated sodium percarbonate. For example, document EP 716 640 presents a process for the production of granulated sodium percarbonate. The process uses a three fluid atomising nozzle having a central tube and two jacket tubes arranged coaxially around the central tube and the central tube extends beyond the jacket tubes by at least one radius of the central tube at the nozzle tip. One of the solutions is introduced into the central tube, one of the solutions is introduced into the annular gap formed between the central tube and the inner jacket tube, and propellant gas is introduced into the outer annular gap formed between the jacket tubes.

Publication EP 787 682 describes also a process for the production of granulated sodium percarbonate, This process uses a four-way atomiser nozzle having a central tube and three jacket tubes arranged coaxially around the central tube. In the process, one of the solutions is introduced into the central tube, the propellant gas is introduced into the annular gap formed between the central tube and the inner (=first) jacket tube, the suspension is introduced between the annular gap formed between the first and second jacket tubes and the propellant gas is introduced into the outer annular gap formed between the jacket tubes.

Document US 2006/0049281 presents a nozzle for spraying liquid substances. The nozzle includes a cylindrical nozzle body and a nozzle mouth piece. Said nozzle body includes an inner tube and an outer tube, the inner tube being connected to a supply for a substance to be sprayed, and the outer tube being connected to a supply for an atomising gas or carrier gas.

All these prior art nozzles however use pressurised air as atomising gas or carrier gas, as its function is to both atomise the liquids and to form the droplets. The problems associated with this are, i.a., important need for pressurised air, which is rather costly in the point of view of operation, maintenance and investment.

### OBJECTS AND SUMMARY OF THE INVENTION

In view of the above-mentioned, it is an object of the present invention to provide for a use of a nozzle for manufacturing granulated sodium percarbonate, which uses a lower pressure of air, so that its operating costs can be decreased when compared to prior art nozzles. Moreover, it is an object of the present invention to provide for a use of a nozzle that is less subject to clogging and maintenance than known nozzles.

These objects are at least partially attained by the use according to the present invention. A typical use of according to the present invention is the use of a two-way spray nozzle with protective gas for manufacturing granular sodium percarbonate, said nozzle comprising
- a central tube having an outlet for an aqueous hydrogen peroxide solution,
- an inner jacket tube arranged coaxially around the central tube, and having an outlet for aqueous sodium carbonate solution,
- an outer jacket tube arranged coaxially around the central tube and inner jacket tube, and having an outlet for a protective gas,
- a threaded ring slot arranged between the central tube and the inner jacket tube at a distance from the outlet of the central tube, wherein the threads of the ring slot are arranged at an angle α with respect of the direction of the longitudinal axis of the central tube,
and in which said protective gas is used at a pressure of less than 0.7 bar.

The present invention also relates to a method for manufacturing granular sodium percarbonate. In a typical method according to the present invention,
- an aqueous hydrogen peroxide solution is added to said reactor through a central tube of a nozzle,
- an aqueous sodium carbonate solution is added to said reactor through an inner jacket tube arranged coaxially around said central tube and through a threaded ring slot arranged between the central tube and the inner jacket tube, wherein the threads of the ring slot are arranged at an angle α with respect of the direction of the longitudinal axis of the central tube
- protective gas is added to said reactor through an outer jacket tube arranged coaxially around the central tube and inner jacket tube.

According to the invention, said protective gas is used at a pressure of less than 0.7 bar.

### BRIEF DESCRIPTION OF THE DRAWING

Figure 1 shows a nozzle arrangement according to the present invention.
Figure 2 shows a more detail of Figure 1.
Figure 3 shows a fluidised bed reactor usable with the present invention.

### DETAILED DESCRIPTION OF THE INVENTION

A typical use of according to the present invention is the use of a two-way spray nozzle with protective gas for manufacturing granular sodium percarbonate, said nozzle comprising
- a central tube having an outlet for an aqueous hydrogen peroxide solution,
- an inner jacket tube arranged coaxially around the central tube, and having an outlet for aqueous sodium carbonate solution,
- an outer jacket tube arranged coaxially around the central tube and inner jacket tube, and having an outlet for a protective gas,
- a threaded ring slot arranged between the central tube and the inner jacket tube at a distance from the outlet of the central tube, wherein the threads of the ring slot are arranged at an angle α with respect of the direction of the longitudinal axis of the central tube,
and in which said protective gas is used at a pressure of less than 0.7 bar.

According to an embodiment of the invention, the protective gas is used at a pressure of less than 0.5 bar, preferably less than 0.3 bar.

In the prior art nozzles, the atomising gas is typically used at pressures of 1 to 3.6 bar. Therefore, as the present use provides for a nozzle which only needs a pressure of the protective gas of less than 0.7 bar, the need for pressurised gas is greatly decreased.

Moreover, in the nozzle used in the present invention, the droplets of liquids are formed by pressure difference in the liquid outlets over the nozzle, instead of the compressed, atomising air in the prior art nozzles. In the present invention, air is thus used for fluidising, i.e. for keeping the granules in the fluid bed where the granules of sodium percarbonate are formed, above the nozzle to avoid clogging of the bed material on the nozzle head.

According to a preferred embodiment of the invention, said protective gas is air. As the pressure needed is so low, it is possible to use simply a blowing machine instead of compressed air.

According to one embodiment of the invention, the nozzle forms droplets of having a narrow size distribution. The mean diameter of the droplets can vary from 50 to 1000 micrometers.

It is known in the art that by using compressed air, it is possible to make a quite wide range of droplet size. However, with the present invention, the droplets are more homogeneous in size than with the prior art nozzles.

Due to the present use, it is possible to make nozzles having larger opening for the aqueous sodium carbonate solution, also called the soda ash, which in turn leads to less clogging. On the other hand, it is also possible to make more robust threads on the threaded ring slot and to use larger tolerances, which in turn makes the nozzles less maintenance intensive. All these features lead to lesser manufacturing, maintenance and using costs.

Another advantage of the present invention is that the exit velocity of the droplets from the nozzle is significantly decreased compared to traditional nozzles used in the manufacturing of sodium percarbonate. Indeed, the exit velocity in the traditional nozzles is in the order of 50 m/s, whereas in the present invention this exit velocity is only in the order of 10-30 m/s.

According to the invention, the pressure difference between the liquids entering and leaving the nozzle is from 4 to 8 bars. By the pressure difference it is meant the energy used for atomisation. This is also dearly lower than in the known sodium percarbonate nozzles, i.e in the nozzles where air is not used for atomisation.

In the present invention, the mass ratio of air to liquid is preferably 0.05 - 0.1.

According to an embodiment of the invention, the pressure can be selected from 0.01, 0.05, 0.1, 0.15, 0.20, 0.25, 0.3, 0.4, 0.45, 0.5, 0.55, 0.6 or 0.65 bar up to 0.05, 0.1. 0.15, 0.20, 0.25 0.28, 0.3, 0.4, 0.45, 0.5, 0.55, 0.6 or 0.70 bar. Some suitable ranges for the pressure are for example 0.01-0.7 bar, 0.01-0.5 bar, 0.1-0.3 bar, 0.1-0.25 bar or 0.01-0.1 bar.

According to an embodiment of the invention, the angle α is 1-89° with respect of the direction of the longitudinal axis of the central tube. This angle α can for example be from 1,3,5, 10, 20, 25, 30, 40, 50, 65, 70 or 80° up to 3, 5, 10, 20, 25, 30, 40, 50, 65, 70, 80 or 89° with respect of the direction of the longitudinal axis of the central tube. Some suitable ranges are for example 1-80°, 1-3° or 5-25° with respect of the direction of the longitudinal axis of the central tube. The angle can be measured either clock wise or counter clock wise.

The present invention uses a threaded ring slot around the central tube, and its function is to push the liquid in spiral, so that atomisation is obtained with this spiral movement instead of air.

According to yet another embodiment of the invention, the nozzle used in the present invention comprises a nozzle body comprising a central tube, an inner jacket tube, an outer jacket tube and a threaded ring slot. The nozzle body is connected to fluid pipes. The other ends of said fluid pipes are connected to a connection body, which has an inlet for the hydrogen peroxide solution, an inlet for the sodium carbonate solution and an inlet for the protective gas.

The present invention also relates to a method for manufacturing granular sodium percarbonate. In a typical method according to the present invention,
- an aqueous hydrogen peroxide solution is added to said reactor through a central tube of a nozzle,
- an aqueous sodium carbonate solution is added to said reactor through an inner jacket tube arranged coaxially around said central tube and through a threaded ring slot arranged between the central tube and the inner jacket tube, wherein the threads of the ring slot are arranged at an angle α with respect of the direction of the longitudinal axis of the central tube
- protective gas is added to said reactor through an outer jacket tube arranged coaxially around the central tube and inner jacket tube.

According to the invention, said protective gas is used at a pressure of less than 0.7 bar.

The details and embodiments mentioned above in connection with the use apply mutatis mutandis to the mehtod according to the invention.

The invention is described in more detail with reference to the drawing. The Figures are to be taken as purely schematical and are not to be construed as limiting the scope of the claims. Moreover, the reference numerals in the claims are also not to be construed as limiting the scope of the claims.

### DETAILED DESCRIPTION OF THE DRAWING

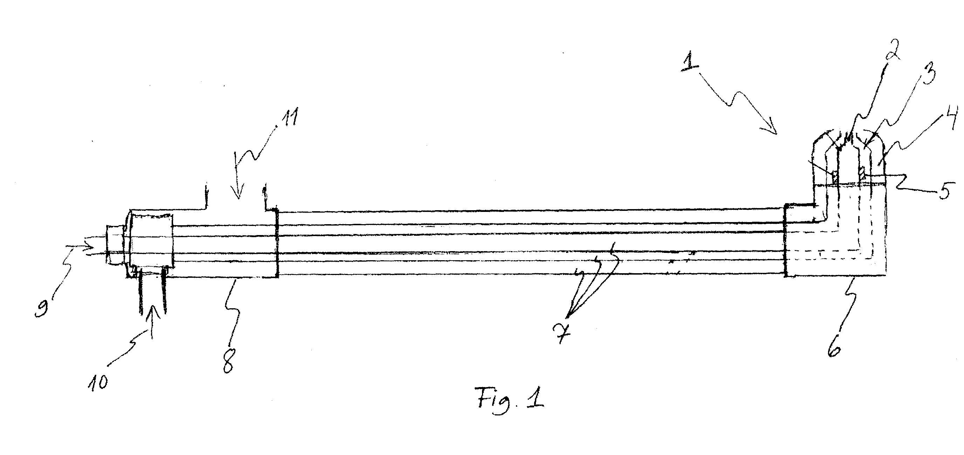

Figure 1 shows a nozzle arrangement according to the present invention in a schematical way and in cross section. In the Figure, there are shown a two-way spray nozzle 1 with protective gas, having a central tube 2, an inner jacket tube 3 arranged coaxially around the central tube 2, an outer jacket tube 4 arranged coaxially around the central tube 2 and inner jacket tube 3 as well as a threaded ring slot 5 arranged around the central tube 2 at a distance from the outlet of the central tube.

All these parts are arranged on a nozzle body 6, and connected to fluid pipes 7. The other ends of said fluid pipes 7 are connected to a connection body 8, which has an inlet for the hydrogen peroxide solution 9, an inlet for the sodium carbonate solution 10 and an inlet for the protective gas 11.

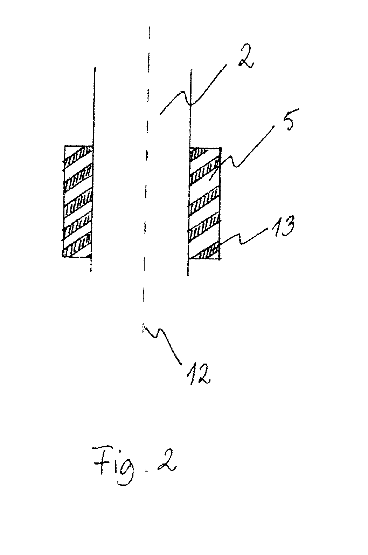

Figure 2 shows the threaded ring slot 5 in a more detailed manner. In this Figure, it can be seen that the threads 13 of the ring slot 5 are arranged at an angle α with respect of the direction of the longitudinal axis 12 of the central tube 2. It is to be bear in mind that the threads 13 are only shown in a schematic manner.

## Claims

1. Use of a two-way spray nozzle (1) with protective gas for manufacturing granular sodium percarbonate, said nozzle comprising
- a central tube (2) having an outlet for an aqueous hydrogen peroxide solution,
- an inner jacket tube (3) arranged coaxially around the central tube, and having an outlet for aqueous sodium carbonate solution,
- an outer jacket tube (4) arranged coaxially around the central tube and inner jacket tube, and having an outlet for a protective gas,
- a threaded ring slot (5) arranged between the central tube and the first jacket tube at a distance from the outlet of the central tube, wherein the threads of the ring slot are arranged at an angle α with respect of the direction of the longitudinal axis (12) of the central tube,
**characterised in that** said protective gas is used at a pressure of less than 0.7 bar.

2. Use according to claim 1, wherein pressure is less than 0.5 bar.

3. Use according to claim 2, wherein pressure is less than 0.3 bar.

4. Use according to claim 1, wherein pressure is 0.01-0.28 bar.

5. Use according to claim 4, wherein pressure is 0.1-0.25 bar.

6. Use according to claim 4, wherein pressure is 0.01-0.1 bar.

7. Use according to claim 1, wherein said angle α is 1-89° with respect of the direction of the longitudinal axis of the central tube.

8. Use according to claim 7, wherein said angle α is 1-80° with respect of the direction of the longitudinal axis of the central tube.

9. Use according to claim 8, wherein said angle α is 1-3° with respect of the direction of the longitudinal axis of the central tube.

10. Use according to claim 8, wherein said angle α is 5-25° with respect of the direction of the longitudinal axis of the central tube.

11. Use according to claim 1, wherein said protective gas is air.

12. Method for manufacturing granular sodium percarbonate in a fluidised bed reactor, wherein
- an aqueous hydrogen peroxide solution is added to said reactor through a central tube of a nozzle,
- an aqueous sodium carbonate solution is added to said reactor through an inner jacket tube arranged coaxially around said central tube and through a threaded ring slot arranged between the central tube and the first jacket tube, wherein the threads of the ring slot are arranged at an angle α with respect of the direction of the longitudinal axis of the central tube
- protective gas is added to said reactor through an outer jacket tube arranged coaxially around the central tube and inner jacket tube,
**characterised in that** said protective gas is used at a pressure of less than 0.7 bar.
